Europäisches Patentamt

European Patent Office

Office européen des brevets

(11) Publication number: **0 282 104**
**A1**

## EUROPEAN PATENT APPLICATION

(21) Application number: 88200172.0

(22) Date of filing: 02.02.88

(51) Int. Cl.⁴: **G06F 15/20 , B41J 7/90**

(30) Priority: **12.02.87 NL 8700339**

(43) Date of publication of application:
**14.09.88 Bulletin 88/37**

(84) Designated Contracting States:
**DE FR GB NL**

(71) Applicant: **Océ-Nederland B.V.**
**St. Urbanusweg 43**
**NL-5914 CC Venlo(NL)**

(72) Inventor: **Kitzen, Eugène Hubert**
**Professor Lambertstraat 36**
**NL-6419 BP Heerlen(NL)**

(74) Representative: **Hanneman, Henri W.A.M. et al**
**Océ-Nederland B.V. Patents and Information**
**Postbus 101**
**NL-5900 MA Venlo(NL)**

(54) **Word processing system.**

(57) A word processing system adapted for the make-up and/or reception of a text in abbreviated script in the form of alphanumeric characters, each alphanumeric character representing a word, a processor system in response to an input command converting each alphanumeric character in the text into the corresponding word, and a memory system comprising a magnetic disc memory divided up into a number of sectors, each sector being selectable by means of a label, each label being formed by an alphanumeric character of the abbreviated script, and the corresponding word being stored in each sector associated with a label.

EP 0 282 104 A1

## Word processing system

This invention relates to a word processing system comprising an inputting system, a reproducing system, a processor system and a memory system, the word processing system being adapted to making up and/or receiving a text in abbreviated script in the form of alphanumeric characters, each alphanumeric character or set of alphanumeric characters representing a word or a combination of words, in response to an input command the processor system converting each alphanumeric character or set of alphanumeric characters into the corresponding word or combination of words, and the memory system comprising a magnetic disk memory divided up into a number of sectors.

A system of this kind is frequently used in an office environment as a stand-alone system or as part of an office automation system of which the word processing system forms part as a central unit or as a work station. To obtain rapid text inputting via a keyboard, an abbreviated script is used. One example of this is known from German patent 32 19 144. Words or phrases which occur frequently are stored in an auxiliary memory of a word processor on addresses which can be selected on their corresponding abbrevations. When an abbreviation is input for a word in the form of an alphanumeric character or a set of alphanumeric characters, these characters are first stored in a working memory and displayed on a screen. After an alphanumeric character has been input, the processor selects the address in the auxiliary memory which corresponds to that alphanumeric character. If a second alphanumeric character is input, the processor selects the address in the auxiliary memory which corresponds to the two alphanumeric characters input, and so on. Actuation of a call-up key on the keyboard then erases the two alphanumeric characters from the working memory and the word selected in the auxiliary memory is placed in the working memory and shown on the display, the starting position of the word corresponding to the starting position of the alphanumeric characters input previously. To ensure that this replacement of alphanumeric characters by the corresponding words can be effected rapidly, the auxiliary memory used is preferably the random access memory (RAM) present in the word processor.

A disadvantage of this is the limited memory capacity which can be reserved in a word processor to store a list of words for abbreviation and their coresponding alphanumeric characters. One of the reasons for this is that a considerable part of this memory must be left free for the storage of the pages of text finally obtained.

A solution that has been indicated for this problem, according to the cited patent, is the use of a disk memory with rapid addressability. A disk memory of this kind contains a number of tracks each subdivided into a fixed number of sectors. These sectors are in turn divided up into a fixed number of bytes. If an abbreviated word is put into the systems directory in the form of a number of alphanumeric characters, the operating system reserves for this purpose memory capacity ( = numbers of sectors) such that a complete page of text can be stored therein. The translated word corresponding to the abbreviated word is placed therein, whereas the rest of the reserved sectors is left open.

The calling up (search) of a word in the directory is generally not effected in response to the actuation of a single key on the keyboard, but is often menu-controlled, all kinds of parameters having to be filled in. The result of this is that only a relatively small number of words and abbreviated words can be stored.

The object of the invention is to obviate the above disadvantages.

According to the invention this object is attained in a word processing system according to the preamble, in that each sector can be selected by means of a label, each label being formed by an alphanumeric character or combination of alphanumeric characters of the abbreviated script, and the corresponding word or group of words being stored in each sector associated with a label.

Consequently, a very large number of words can be stored with their corresponding alphanumeric characters on a disk memory and these words are directly addressable, thus giving rapid processing.

These and other advantages will be apparent from the following description of the word processing system with reference to the Figures in which:

Fig. 1 represents a word processing system according to the invention, and

Fig. 2 represents the disc memory.

The abbreviated script used was developed by Izaäk Venema and in the first instance is adapted to the Dutch language. However, the abbreviation method used can be transferred to any other language. Since abbreviated script is based on the normal script used, it can be learnt quickly by anyone, unlike normal shorthand for example.

Some examples of the use of this abbreviated script will be given below.

Abbreviated script uses abbreviations and abbreviation rules. For example, there are one-letter abbreviations for words which occur most frequently in a language, e.g.:

a = aan    e = een    n = en
b = bij    k = ik     x = keer
c = dan    l = zal    y = hij
d = de     m = om     z = ze

Verbs are abbreviated by ommitting the ending -en and words which occur frequently are abbreviated by two letters, e.g.:

maken = mak    blijven = bf
halen = hal    wijzen = ws

Prefixes and suffixes are abbreviated to one letter, e.g.:

on - = o -    -baar = - b
ge - = g -    -heid = - h
ongeluk = ogluk    dankbaarheid = dankbh

Whole phrases can be abbreviated with a small number of letters e.g.:

aan de hand van = adhv

aan de heer = adh

met vriendelijke groeten = mvg

zo goed als nieuw = zgan

There are also a large number of words which are abbreviated to the first letter of a syllable.

The word endings -ing and -dig are respectively abbreviated to -i and -g e.g.:

beslissing = bsi    telefoon = tlf
investering = ivti    personeel = psn

Abbreviations to the first four letters of a word also occur, e.g.:

discussie = disc

respectievelijk = resp

There are many other abbreviations and abbreviation rules giving a very large number of words and abbreviations for abbreviated script.

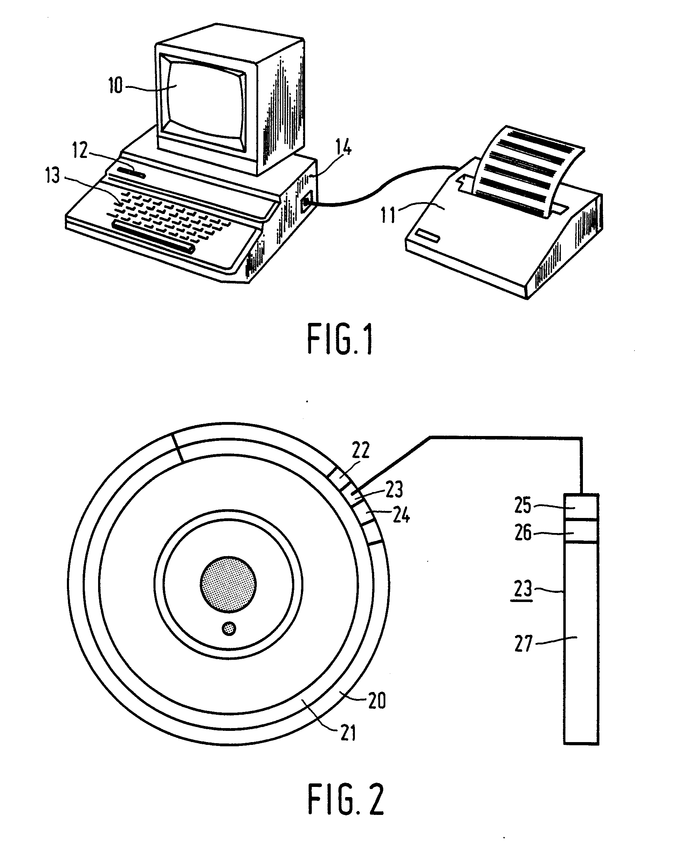

A word processing system (see Fig. 1) is usually made up of a processor system 14 with a reproduction system (a display 10 and/or printer 11), a memory system (local RAM, floppy disc 12 and/or hard disc) and an inputting system (I/O facilities, keyboard 13). It has a program which enables the processor system to reproduce on the display the characters input on the keyboard and to insert, erase, add, etc., characters in the text via all kinds of commands.

Thus text can be generated and corrected and finally printed via a printer. The Océ 8600 is one example of a word processing system comprising a central processing unit provided with two micro-floppy drives and also a keyboard and a display. The central processing unit is connected to a disc server in which a magnetic disc memory having a capacity of about 30 MByte is accommodated. More word processors or personal computers can be connected to the disc server. The word processing program can be loaded into the system via hard disc or via micro-floppy discs. Data can be exchanged between the various memory systems.

The central processing unit can be connected to a printer in order to print pages of text on paper as required.

The word processing system according to the invention uses the magnetic disc memory of a capacity of about 30 MByte for the storage of the list of words and their associated abbreviations.

The disc memory (see Fig. 2) is subdivided into a number of tracks (20, 21) and each track is in turn subdivided into fixed areas (22, 23, 24,) (or sectors) each 256 bytes large. Each word from the list of words is stored in a data field 27 of a sector 23 so that each sector does not contain more than one word. The abbreviated forms of these words, i.e. the corresponding alphanumeric characters, are stored as a label 25 in the first bytes of the sector 23 and are part of the directory. This directory is arranged in accordance with a sorted balanced binary tree structure which is well known in the art. For this purpose, the numeric value of the separate alphanumeric characters is determined for each label, e.g. in accordance with the ASCII code. The labels are arranged in the memory in logic groups on the basis of these numeric values. The labels are provided with pointers 26 pointing to a following step in the tree structure on the basis of logic decisions such as "larger than", "smaller than", and so on.

Each label also contains data which enable the processor to find the corresponding word on a given track and a given sector.

Thus only one sector is reserved for each label in the directory. As a result, the system directory can be practically unlimited in size while a very rapid search is ensured.

In this way some 10 000 words with their corresponding abbreviations can be stored on about 2.5 MByte while a search operation can be performed in a fraction of a second.

If, for example, an operator successively inputs the alphanumeric characters bsi via the keyboard on a system loaded in this way, these characters will appear on the display. A key on the keyboard (soft key) is so programmed that on actuation of that key a search operation is started in the memory, the alphanumeric characters bsi being the target word. The alphanumeric characters bsi are erased from the display. If this target word agrees with the label bsi in the memory, the associated word (in this case "beslissing") is called up from the memory and displayed on the display at the location of the previously displayed alphanumeric characters bsi.

A function of this kind of the soft key as described above is often termed "insert" in word processors. The part of a text which belongs to an associated label is called up from the memory and displayed on the display.

In the word processing system according to the invention all the keys on the keyboard are freely programmable. This means that each key can be allocated a different function. It has been found advantageous for the rapid inputting of text for the above-mentioned soft key function to be allocated to the space key. After the space key is actuated the search operation starts in the memory and the corresponding word appears on the display.

In another embodiment of the word processing system according to the invention, the 30 MByte memory is divided up even more effectively. In this case the size of an area is not predetermined but is determined primarily by the content. The tracks are not previously divided up into sectors of a fixed size, but the size of the sector is determined by the length of the word, possibly together with data concerning the end point of the word or data concerning the length of the word, during reading in. In this way the size of a sector is determined primarily by the length of the corresponding word.

As already stated, the word processing system according to the invention can also be used as a central word processing unit. A text in abbreviated script composed on any arbitrary (but compatible) work station or personal computer can, in the word processing system according to the invention, be automatically converted into readable text by inputting the data to the system and expanding (= translating) the text in accordance with the above described program. In this way it is also possible to subject this expanded text by line or word to a spelling correction program and/or a word abbreviation program. It is also possible to subject this text to a program in which the logic assocation of the words occurring therein is checked and in which on the basis of that check intellingent amendments are made to the text.

The invention is not restricted to the above embodiment. Those versed in the art will be able to make all kinds of modifications all of which will however come under the following claims.

## Claims

1. A word processing system, comprising an inputting system, a reproducing system, a processor system and a memory system, the word processing system being adapted to making up and/or receiving a text in abbreviated script in the form of alphanumeric characters, each alphanumeric character or set of alphanumeric characters representing a word or combination of words, in response to an input command the processor system converting each alphanumeric character or set of alphanumeric characters in the text into the corresponding word or combination of words, and the memory system comprising a magnetic disk memory divided up into a number of sectors, characterised in that each sector can be selected by means of a label, each label being formed by an alphanumeric character or combination of alphanumeric characters of the abbreviated script, and the corresponding word or group of words being stored in each sector associated with a label.

2. A word processing system according to claim 1, characterised in that each sector indicated by a label is variable in size, the size of the sector being determined mainly by the length of the corresponding word.

3. A word processing system according to claim 1 or 2, characterised in that the labels have a numeric representation and in that the labels are arranged in the memory in logic groups based on the associated numeric values of the alphanumeric characters of the label in the form of a sorted balanced binary tree structure.

4. A word processing system according to any one of the preceding claims, the inputting system comprising an alphanumeric keyboard, characterised in that after an alphanumeric character or group of alphanumeric characters has been input, a subprogram present in the memory system is performed by the processor system in response to actuation of the space key, by means of which the input alphanumeric character or group of alphanumeric characters is compared with the labels present in the disc memory and, on equivalence, the word or group of words associated with the label is substituted in the text.

5. A word processing system according to claims 1, 2 or 3, characterised in that the word processing system is provided with a program by means of which the text input in abbreviated script is subjected to checking of the logic association of the alphanumeric characters appearing therein, and in which intellingent amendments can be made in the text on the basis of said checking.

FIG.1

FIG. 2

**European Patent Office**

# EUROPEAN SEARCH REPORT

Application Number

EP 88 20 0172

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 073 927 (SONY) <br> * Page 1, line 109 - page 2, line 19 * <br> --- | 1-5 | G 06 F 15/20 <br> B 41 J 7/90 |
| Y | GB-A-1 572 709 (XEROX) <br> * Page 2, lines 25-62 * <br> ----- | 1-5 | |

TECHNICAL FIELDS
SEARCHED (Int. Cl.4)

G 06 F 15/20
B 41 J 5/46
B 41 J 7/90

The present search report has been drawn up for all claims

| Place of search | Date of completion of the search | Examiner |
|---|---|---|
| THE HAGUE | 31-05-1988 | BURGAUD C. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P0401)